## Europäisches Patentamt

## European Patent Office

## Office européen des brevets

(11) Veröffentlichungsnummer: **0 031 597**
**A2**

# EUROPÄISCHE PATENTANMELDUNG

(21) Anmeldenummer: 80108241.3

(51) Int. Cl.³: **H 02 B 11/00**

(22) Anmeldetag: **29.12.80**

(30) Priorität: **29.12.79 JP 172144/79**

(43) Veröffentlichungstag der Anmeldung: **08.07.81** **Patentblatt 81/27**

(84) Benannte Vertragsstaaten: **DE IT**

(71) Anmelder: **FUJI ELECTRIC CO. LTD.,** 1-1, **Tanabeshinden, Kawasaki-ku, Kawasaki 210 (JP)**

(72) Erfinder: **Nowatari, Masayoshi, 4-4-4 Higashi Midorigaoka-cho, Miki-shi Hyogo (JP)**
Erfinder: **Fugushima, Shigenori, Dipl.-Ing., 1-24-41 Tachibana-cho, Amagasaki-shi Hyogo (JP)**
Erfinder: **Ishibane, Mitsugi, 784-4 Ohashi Fukiage-machi, Kitaadachi-gun Saitama (JP)**
Erfinder: **Suzuki, Zenjiro, Dipl.-Ing., 3-4-10 Sin-machi, Hino-shi Tokyo (JP)**

(74) Vertreter: **Mehl, Ernst, Dipl.-Ing. et al, Postfach 22 01 76, D-8000 München 22 (DE)**

(54) **Ausfahrbare Schalteinheit.**

(57) Die Erfindung bezieht sich auf eine ausfahrbare Schalteinheit mit einem feststehenden und einem beweglichen, den eigentlichen Schalter aufnehmenden Teil (Wagen 1). An dem beweglichen Teil sind die Energiesteckanschlüsse (5) und an dem feststehenden die Energiegegensteckanschlüsse (6) befestigt, die ineinander geführt werden können. Zusätzlich sind Steckanschlüsse (8) für die Steuerleitungen (9) und beweglichen Teil (Wagen 1) vorhanden. Die Steckanschlüsse (8) werden einfahrstellungsabhängig und das bewegliche Teil (Wagen 1) abhängig vom zusammengefügten Zustand der Steckanschlüsse (8) für die Steuerleitungen (9) verriegelt.

Hierdurch ist sichergestellt, dass die Steuerleitungen im eingefahrenen Zustand der Schalteinheit mit dem Wagen (1), d.h. dem Schalter (2) in Verbindung gebracht sind.

Fuji Electric Co., Ltd.          Unser Zeichen
Kawasaki, Japan                  VPA 79 P 8575 EUR

## Ausfahrbare Schalteinheit

Die Erfindung bezieht sich auf eine ausfahrbare Schalteinheit mit einem feststehenden, die Energiegegensteckanschlüsse haltenden und einem beweglichen, die Energiesteckanschlüsse haltenden Teil, wobei zusätzlich
Steckanschlüsse für die Steuerleitungen am beweglichen
Teil vorhanden sind.

Bei einer bekannten Schalteinheit der obengenannten Art
(DE-PS 11 78 926) werden die Steuerleitungen über normale Steckverbindungen mit dem Wagen, d.h. mit der Steuerung des Lastschalters verbunden. Hierbei ist es möglich, den eigentlichen Schalter in Betriebsstellung zu
fahren, ohne daß die Steuerleitungen angeschlossen sind,
d.h. es können fehlerhafte Schaltvorgänge ausgelöst
werden, die nicht ohne weiteres zu erkennen und zu
überwachen sind.

Durch die Erfindung soll eine Schalteinheit der obengenannten Art geschaffen werden, bei der eine definitive Zuordnung der Steueranschlüsse im eingefahrenen
Zustand des Schalters zum Schalter selbst gewährleistet
ist. Dies wird auf einfache Weise dadurch erreicht, daß
die Steckanschlüsse einfahrstellungsabhängig und das
bewegliche Teil abhängig vom zusammengefügten Zustand
der Steckanschlüsse für die Steuerleitungen verriegelbar ist. Eine einfache, konstruktive Ausführung ergibt
sich, wenn die Verriegelungselemente aus verschwenkbaren
Hebeln bestehen, die mit Verriegelungsbolzen in Eingriff
bringbar sind. Ohne zusätzliche Abtastmittel kann au gekommen werden, wenn zur einfahrstellungsabhängigen Verriegelung der Steckanschlüsse das Führungsbett für das

La 2 Syr / 18.12.1980

bewegliche Teil dient. Die Verriegelung kann auf einfache Weise aufgehoben werden, wenn ein im beweglichen Teil der Steckanschlüsse vorgesehener Bolzen mit einem Verstellansatz des verschwenkbaren Hebels derart in Eingriff bringbar ist, daß im zusammengefügten Zustand der Steckanschlüsse der Hebel außerhalb des Verriegelungsbereiches liegt.

Anhand der Zeichnung wird ein Ausführungsbeispiel gemäß der Erfindung beschrieben und die Wirkungsweise näher erläutert.

Es zeigen:
Fig. 1 die prinzipielle Ausbildung der erfindungsgemäßen ausfahrbaren Schalteinheit,
Fig. 2 die Verriegelungsanordnung im eingefahrenen Zustand der Schalteinheit und
Fig. 3 die Anordnung gemäß Fig. 2 im ausgefahrenen Zustand der Schalteinheit.

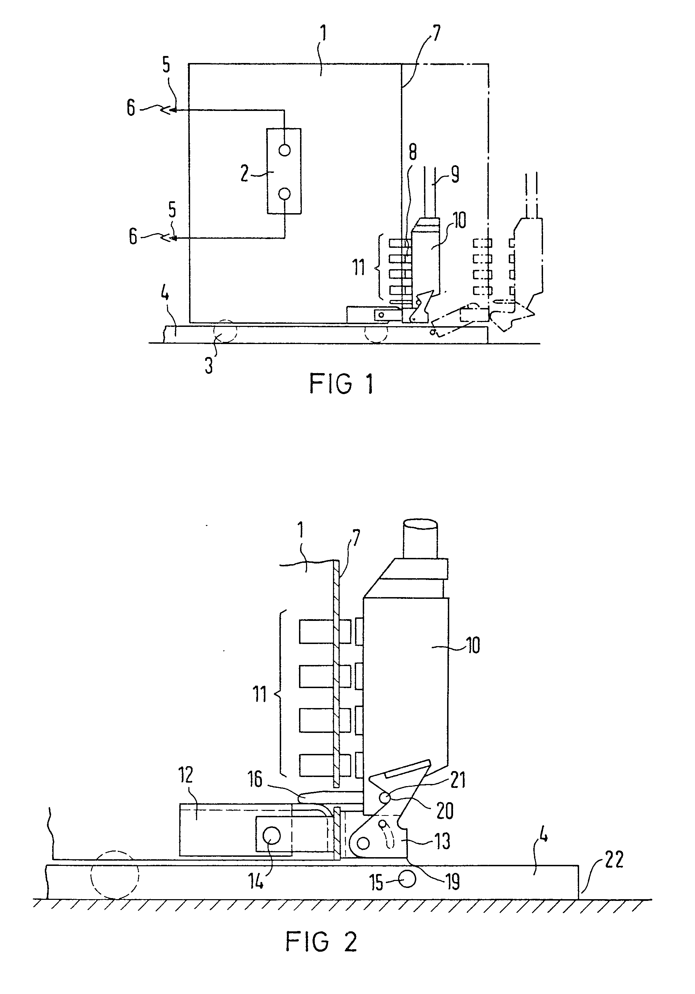

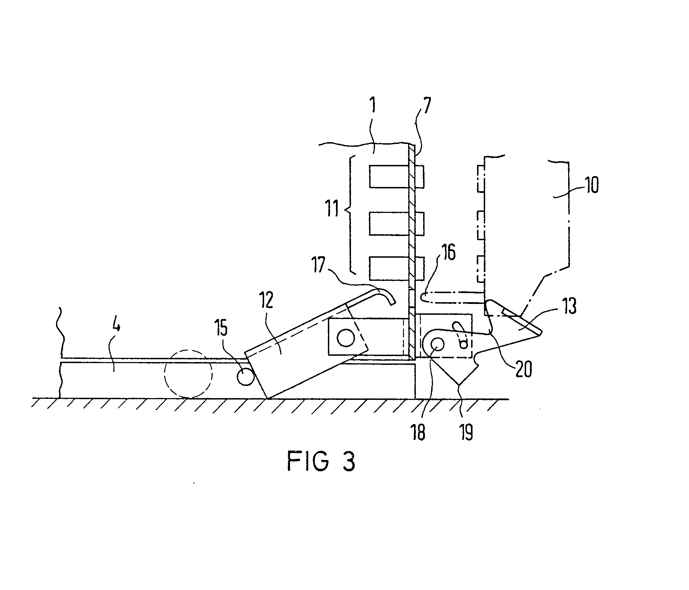

Die Schalteinheit besteht aus dem Wagen 1, in dem der eigentliche Lastschalter 2 untergebracht ist. Die Räder 3 des Wagens 1 laufen in dem Führungsbett 4. Der Lastschalter 2 ist an die mit dem Wagen 1 verbundenen Energiesteckanschlüsse 5 angeschlossen, die mit den feststehenden Energiegegensteckanschlüssen 6 zusammenwirken. An der Frontseite 7 des Wagens 1 sind Steckanschlüsse 8 für Steuerleitungen 9 vorgesehen. Die Steckanschlüsse 8 bestehen aus dem Stecker 10 und der Steckerbuchse 11. Die aus den Fig. 2 und 3 ersichtliche Verriegelungseinrichtung besteht im wesentlichen aus zwei Hebeln 12 und 13, von denen der Hebel 12 um den Bolzen 14 drehbar gelagert ist. Der Hebel 12 arbeitet mit dem am Führungsbett 4 befestigten Stopper 15 zusammen. Der Hebel 12 liegt innerhalb der Schalterkontur, solange der Schalter in Betriebsposition ist, wie das aus Fig. 4 ersichtlich ist. Sobald der Schalter sich in der ausgefahrenen Stellung befindet und der Stecker 10 aus der Steckerbuchse 11 herausgezogen ist, fällt der Hebel 12 in die aus Fig. 3 ersichtliche Lage und bildet einen nach unten herausragenden Vorsprung, der mit dem Stopper 15 in Eingriff kommt, d.h. der Wagen 1 kann nicht in die eingefahrene Stellung gebracht werden. Um den Schalter in Betriebsstellung zurückführen zu können, muß der Stecker 10 in die Steckerbuchse 11 eingeführt werden, wobei ein Bolzen 16 mit einem Verstellansatz 17, im vorliegenden Fall einem abgerundeten Endteil, in Eingriff kommt, um den Hebel 12 in die aus Fig. 4 ersichtliche Lage zurückzuführen, wodurch das Einschieben des Wagens in die eingeschobene Stellung ermöglicht wird. Der zweite Hebel 13 ist um einen Bolzen 18 schwenkbar gelagert. Der Hebel 13 befindet sich in der aus Fig. 3 ersichtlichen Lage in der Ruhestellung, d.h. der Stecker 10 kann aus der Steckerbuchse herausgezogen und auch eingesteckt werden. Sobald der Wagen 1 in die eingefahrene Stellung gebracht wird, kommt ein Vorsprung 19 mit dem Führungsbett in Berührung, so daß sich der Hebel in die aus Fig. 2 ersichtliche Lage verschwenkt. Hierbei kommt eine Aussparung 20 am Hebel 13 mit einem weiteren Bolzen 21 in Verriegelungseingriff, so daß das Herausziehen des Steckers 10 aus der Steckerbuchse 11 verhindert wird. Die dargestellte Verriegelungseinrichtung verhindert, daß der Wagen in Betriebsposition, d.h. die Energiesteckanschlüsse 5 mit den Energiegegensteckanschlüssen 6 in Verbindung gebracht werden können, ohne die Steuerkreise mit dem Wagen 1 zu verbinden; denn ohne das Einführen des Bolzens 16 verhindert der Hebel 12 das Einführen des Wagens.

4 Patentansprüche
4 Figuren

Patentansprüche

1. Ausfahrbare Schalteinheit mit einem feststehenden, die Energiegegensteckanschlüsse (6) haltenden und einem beweglichen, die Energiesteckanschlüsse (5) haltenden Teil (Wagen 1), wobei zusätzlich Steckanschlüsse (8) für die Steuerleitungen (9) am beweglichen Teil (Wagen 1) vorhanden sind, d a d u r c h   g e k e n n z e i c h - n e t ,   daß die Steckanschlüsse (8) einfahrstellungsabhängig und das bewegliche Teil (Wagen 1) abhängig vom zusammengefügten Zustand der Steckanschlüsse (8) für die Steuerleitungen (9) verriegelbar ist.

2. Schalteinheit nach Anspruch 1,   d a d u r c h   g e k e n n z e i c h n e t ,   daß die Verriegelungs- elemente aus verschwenkbaren Hebeln (12, 13) bestehen, die mit Verriegelungsbolzen (15, 21) in Eingriff bringbar sind.

3. Schalteinheit nach Anspruch 1 oder 2,   d a d u r c h   g e k e n n z e i c h n e t ,   daß zur einfahrstellungs- abhängigen Verriegelung der Steckanschlüsse (8) das Führungsbett (4) für das bewegliche Teil (Wagen 1) dient.

4. Schalteinheit nach Anspruch 2 oder 3,   d a d u r c h   g e k e n n z e i c h n e t ,   daß ein im beweglichen Teil (Stecker 10) der Steckanschlüsse (8) vorgesehener Bolzen (16) mit einem Verstellansatz (17) des verschwenkbaren Hebels (12) derart in Eingriff bringbar ist, daß im zusammengefügten Zustand der Steckanschlüsse (8) der Hebel (12) außerhalb des Verriegelungsbereiches (15) liegt.

79 P 8575    0031597

FIG 1

FIG 2

0031597
79 P 8575

FIG 3